# EUROPÄISCHE PATENTSCHRIFT

(11) **EP 3 431 656 B1**
(45) Veröffentlichungstag und Bekanntmachung des Hinweises auf die Patenterteilung: **25.03.2020**
(21) Anmeldenummer: 18178938.9
(22) Anmeldetag: 21.06.2018
(51) Int. Cl.: E01B 27/06, B08B 7/02, B24C 1/00, B24C 3/08, B24C 3/14, B24C 9/00, E01C 19/05

(54) **VERFAHREN ZUR BEHANDLUNG VON SCHOTTERSTEINEN**
METHOD FOR THE TREATMENT OF BALLAST
PROCÉDÉ DE TRAITEMENT DE BALLAST

(30) Priorität: 19.07.2017 DE 102017116241
(43) Veröffentlichungstag der Anmeldung: 23.01.2019
(73) Patentinhaber: Sander, Kurt, 31675 Bückeburg (DE)
(72) Erfinder: Sander, Kurt, 31675 Bückeburg (DE)
(74) Vertreter: Scheffler, Jörg

(56) Entgegenhaltungen:
- EP-A2- 2 213 796
- DE-B- 1 144 147
- GB-A- 2 008 993

## Beschreibung

Die Erfindung betrifft ein Verfahren zur Behandlung von Schottersteinen für Gleisanlagen oder im Straßenbau.

Schottersteine in Gleisanlagen oder im Straßenbau behalten nur dann die erforderliche Lagestabilität, wenn das Schottergerüst eine genügende innere Reibung aufweist. Hierzu ist es erforderlich, dass der Schotter scharfkantig ist und vorzugsweise keinen Kornanteil unter 22 mm aufweist. Ein verlegtes Schotterbett verschmutzt allerdings über die Jahre durch Staub-, Schmutz- und Pflanzeneintrag und besonders durch den Abrieb von Schottersteinen, die durch jahrelange Belastungen allmählich ihre Rauigkeit verlieren. Daher ist es in der Regel nach einem bestimmten Zeitraum, üblicherweise nach zehn bis zwanzig Jahren, erforderlich, eine Reinigung des Schotterbettes vorzunehmen. Hierzu wird das Gleis angehoben und entfernt. Anschließend wird der Schotter entfernt, gesiebt und gereinigt.

Zur Aufbereitung des Altschotters wird dieser bevorzugt in einem Fingersieb gesiebt und einer Prallmühle zum Schärfen zugeführt. Des Weiteren kann der Altschotter in einem Körnungssieb gesiebt werden, um Über- und Unterkorn auszuscheiden und Schotterkörner der geforderten Größen herzustellen. Des Weiteren kann der Altschotter gewaschen werden, um Verunreinigungen zu beseitigen.

Der in der Prallmühle geschärfte Schotter wird sodann einem Körnungssieb zugeführt, um Schotter der gewünschten Körnung zu erhalten. Über- und Unterkorn aus dem Körnungssieb werden wiederrum als Zumischmaterial für die neue Unterbauschicht verwendet.

Als Trennstufe kann beispielsweise ein Rollenrost verwendet werden, um Grobpartikel, wie große Steine und Grasbüschel, abzutrennen. Auch kann ein Magnetabscheider vorgesehen sein, um Metallteile abzutrennen.

Die DE 199 38 633 A1 betrifft ein Verfahren zur Reinigung eines Schotterbettes eines Bahngleises, wobei nach Entfernen des Gleises der Schotter des Schotterbettes von der Gleistrasse aufgenommen und im Bereich der Gleistrasse, vorzugsweise unmittelbar nach der Aufnahme, gereinigt, gebrochen, vorzugsweise geprallt und anschließend wieder in die Gleistrasse verbracht wird. Durch das Brechen des Schotters wird die gewünschte Scharfkantigkeit des Schotters wieder erreicht.

Von wesentlicher Bedeutung ist, dass es beim Brechen des Schotters nicht zu einer wesentlichen Verringerung der Korngröße der einzelnen Schotterstücke kommen darf, sondern lediglich zum Abplatzen kleinerer plättchenförmiger Teile.

Es hat sich gezeigt, dass Abplatzungen des Schotters beim Brechen besonders gut durch eine Prallstufe erzielbar sind, wobei der Schotter wieder scharfkantig und in seiner Korngröße nur minimal verringert wird.

Die DE 10 2009 007 227 B3 bezieht sich auf eine Vorrichtung und ein Verfahren zur Behandlung von Schottersteinen für Gleisanlagen. Anstelle der Waschung des Schotters mittels Waschwasser wird CO₂ -Trockeneis, vorzugsweise in Form von Pellets verwendet. Die Bedüsung bzw. Bestrahlung des Schotters kann mittels des CO₂-Trockeneises im Nachlauf zur Brechung sowie Siebung erfolgen. Der Vorteil dieser Reinigung besteht darin, dass die durch das Trockeneis gelösten Schutzpartikel trocken und von Waschwasser frei sind. Somit können die Schmutzpartikel in die Entsorgungsmassen des Schmutzschotters sowie der Schmutzpartikel eingeführt und mit den zu entsorgenden Bodenmassen über die normale Förder- und Transporttechnik abtransportiert werden.

Die GB 2 008 993 A betrifft ein Verfahren zum Bearbeiten von Steinen durch Bestrahlen mit Metallsandpellets, um eine äußere Textur zu erreichen, die dem Stein ein ungewöhnliches und ansprechendes Aussehen verleiht. Zur Rückgewinnung der Metallsandpellets dient dabei eine Siebvorrichtung mit einer Auffangwanne, um die Pellets von Ziegelstücken und anderen grobteiligen Verunreinigungen zu trennen und die Pellets auch nach ihrem Durchmesser klassieren zu können, sodass diese zurückgeleitet werden können.

Die DE 1 144 147 B betrifft eine Einrichtung zum Abstrahlen von horizontal bewegtem, liegendem Walzgut mittels Schleuderrädern, um so beliebig profiliertes Walzgut, Bleche, Bänder usw. durch die Einrichtung zu führen und abzustrahlen.

Ferner betrifft die DE 33 14 453 A1 ein Verfahren zur Profilierung von Schleifkörpern. Hierzu dient ein Profilkörper und ein Schleifkörper, die zwischen sich einen Spalt vorgewählter Breite einschließen, in den das Strahlmittel zugeführt wird. Als Strahlmittel können handelsübliche Strahlmittel, beispielsweise auch Stahl-Drahtkorn, eingesetzt werden, wobei das Strahlmittel und der Abrieb beispielsweise mittels Rüttelvorrichtungen oder Magnetabscheidern separiert werden können.

Weiterhin ist aus der DE 101 332 46 A1 bekannt, mittels eines Arbeitsgerätes den Schotter des Schotterbettes aufzunehmen. Das über eine Förderbandeinrichtung geförderte Schottermaterial wird zu einer nachfahrenden Brechvorrichtung gefördert. Diese weist eine mit dem hinteren Ende der Förderbandeinrichtung ausgerichtete Eingabetrichteranordnung auf, über welche das Schottermaterial aufgenommen wird. In der Brechvorrichtung wird mittels einer Prallmühle das Schottermaterial des Schotterbettes zerkleinert und dabei gegebenenfalls auch unter Einsatz entsprechender Siebeinrichtungen eine derartige Körnungsverteilung bereitgestellt, die zum nachfolgenden Aufbau einer Schottertragschicht geeignet ist. Hier können beispielsweise zu feine Partikel ausgesiebt werden und zur Seite abgegeben werden, sodass diese nicht in die Schottertragschicht miteingebunden werden. Bei der bisher üblichen Reinigung des Schotters mittels Prallmühlen, bei denen der Schotter beschleunigt und gegen einen Anschlag geschleudert wird, um Abplatzungen an den Schottersteinen zu erzeugen, erweist es sich in der Praxis allerdings als problematisch, dass die Art und Größe der Abplatzungen schwierig einzustellen sind. So führt eine zu geringe kinetische Energie dazu, dass die erforderlichen Abplatzungen nicht zuverlässig erreicht werden, während demgegenüber zu große Abplatzungen zu einer unerwünschten Zerkleinerung der Schottersteine führen, die dann nicht mehr verwendet werden können. Zudem sind die Prallmühlen im Betrieb aufwendig, verbrauchen große Energiemengen, verursachen hohe Schallemissionen und erfordern regelmäßige Wartungen. Insgesamt führt diese Art der erfahrungsbasierten Behandlung oftmals nicht zu zuverlässig reproduzierbaren Ergebnissen.

Der Erfindung liegt die Aufgabe zugrunde, eine Möglichkeit zu schaffen, die gewünschte Schärfung der Schottersteine mit reproduzierbarer Genauigkeit und mit einem vergleichsweise geringen Ausschussanteil zu realisieren.

Diese Aufgabe wird erfindungsgemäß mit einem Verfahren gemäß den Merkmalen des Anspruches 1 gelöst. Eine weitere Ausgestaltung der Erfindung ist dem Unteranspruch zu entnehmen.

Erfindungsgemäß ist also ein Verfahren zur Behandlung von Schottersteinen für Gleisanlagen oder im Straßenbau mit einer Vorrichtung umfassend eine Strahlvorrichtung für metallisches Korn als Prallkörper vorgesehen, bei dem die Schottersteine durch das stark beschleunigte metallische Korn bestrahlt werden, wobei durch kinetischen Energieeintrag bei der Energieübertragung zwischen dem metallischem Korn und den Schottersteinen ein mechanischer Abtrag erfolgt, und wobei das metallische Korn von den Schottersteinen separiert und wiederverwendet wird, um so mit einem vergleichsweise geringen technischen Aufwand eine optimale Trennung der Schottersteine von Anhaftungen einerseits und ein Schärfen der Schottersteine durch Erzeugen oberflächennaher Abplatzungen andererseits zu erreichen. Das metallische Korn wird hierzu dann insbesondere durch den Einsatz magnetischer Kräfte von dem behandelten Schotter separiert und gegebenenfalls nach einer Aufbereitung unmittelbar weiterverwendet.

Vorzugsweise werden die Schottersteine mittels eines Transportbandes durch die Behandlungszone transportiert, während die Schottersteine kontinuierlich mit dem Korn bestrahlt werden.

Hierzu ist eine Vorrichtung vorgesehen, bei der die Vorrichtung eine Strahlvorrichtung für ein metallisches Korn, beispielsweise Drahtkorn, als Prallkörper aufweist. Hierdurch wird in verblüffend einfacher Weise eine äußerst effiziente Reinigung des Schotters ermöglicht, wobei es anders als bei den bisher verwendeten Vorrichtungen nicht erforderlich ist, die Schottersteine gegen eine Prallfläche zu schleudern. Vielmehr werden diese lediglich vorübergehend, insbesondere bis zum messtechnisch erfassten Erreichen des gewünschten Bearbeitungsergebnisses, durch Bestrahlung mittels des Kornes gereinigt, insbesondere also von Anhaftungen befreit. Zugleich entstehen Abplatzungen, die zu der gewünschten Scharfkantigkeit führen. Dadurch wird in reproduzierbarer Weise die Scharfkantigkeit der Schottersteine erreicht, ohne jedoch das beim Stand der Technik damit einhergehende Risiko einer Spaltung der Schottersteine, die dadurch für den weiteren Gebrauch unbrauchbar werden. Dabei erweist es sich als besonders vorteilhaft, dass das Korn aufgrund der unterschiedlichen Dichte und Größe des Kornes im Vergleich zu den behandelten Schottersteinen mit geringem Aufwand von dem Schotter getrennt und einer erneuten Verwendung zugeführt werden kann. Darüber hinaus hat es sich aber auch bereits gezeigt, dass der mit dem Betrieb der Vorrichtung verbundene Energieeinsatz weit unter demjenigen konventioneller Vorrichtung nach dem Stand der Technik liegt. Außerdem ist auch die im Betrieb auftretende Geräuschemission deutlich reduziert, sodass sich die Vorrichtung prinzipiell auch für den Einsatz in der Nähe von Wohngebieten eignet.

Indem die Vorrichtung eine für das Drahtkorn durchlässige Auflage als Transportauflage aufweist, gelangt das metallische Korn nach dem Auftreffen auf die Schottersteine durch die Auflage auf eine unterhalb der Auflage angeordnete Sammelfläche. Von dort gelangt das Korn unmittelbar zur Weiterverwendung. Die Auflage ist dabei beispielsweise als Bestandteile eines umlaufend antreibbaren Transport- oder Förderbandes ausgeführt, sodass die Verweildauer des Schotters im Bereich der Strahleinwirkungszone durch die Vorschubgeschwindigkeit gesteuert werden kann. Selbstverständlich können dabei auch Modulbänder zum Einsatz kommen.

Dabei erweist es sich als besonders praxisgereicht, wenn die Auflage mit regelmäßig oder unregelmäßig angeordneten Durchlassöffnungen, beispielsweise einem Gitter, ausgestattet ist, deren lichte Weite zumindest den maximalen Abmessungen des Kornes entspricht, jedoch nicht größer bemessen ist als das 1,5 bis 2,5-fache der Kornabmessungen. Dadurch gelangt nur ein zu vernachlässigender Anteil von Bestandteilen des Schotters durch die Durchlassöffnungen, wobei selbstverständlich in einer den Durchlassöffnungen in Transportrichtung nachfolgenden Position eine weitere Fraktionierung, beispielsweise durch Siebe vorgenommen werden kann, um die Trennung des Kornes von Schottersteinbestandteilen weiter zu optimieren.

Selbstverständlich kann das Korn hierzu hinsichtlich seiner äußeren Beschaffenheit nicht nur bezüglich der Abmessungen, sondern auch bezüglich möglicher Kanten und Vorsprünge entsprechend ausgewählt bzw. nach einem bestimmten Behandlungszyklus einer entsprechenden Kontrolle und/oder Nachbearbeitung unterzogen werden.

Indem die Vorrichtung mehrere Austrittsöffnungen für das Korn aufweist, wobei zumindest eine Austrittsöffnung vertikal oberhalb der Transportauflage und zumindest eine weitere Austrittsöffnung vertikal unterhalb der Transportauflage angeordnet ist, trifft das Korn zumindest auf die Unterseite und die Oberseite des Schotters. In der Praxis werden jedoch aufgrund der mit dem Aufprall des Kornes verbundenen örtlichen Verlagerung des Schotters weitaus mehr Flächen des Schotters von dem Korn beaufschlagt.

Indem das Korn mittels zumindest eines, insbesondere mehrerer in Transportrichtung des Schotters hintereinander und/oder nebeneinander angeordneter Schleuderräder beschleunigt und in Richtung der Auflage lenkbar ist, werden durch den jeweiligen Streuwinkel der einzelnen Schleuderräder eine Vielzahl von Aufprallwinkeln des Kornes auf dem Schotter und dadurch eine entsprechend hohe Abtragsleistung sichergestellt. Dabei kann die jeweilige Austrittsöffnung des Kornes darüber hinaus auch anpassbar oder insbesondere hinsichtlich der Position und der Orientierung einstellbar ausgeführt sein. Beispielsweise können die Austrittsöffnungen im Betrieb stetig bewegt werden.

Weiterhin hat es sich als besonders Erfolg versprechend erwiesen, wenn der Auflage ein Magnetfeld eines Magneten zur Separierung des Kornes von dem Schotter zugeordnet ist, sodass das metallische Korn durch die Magnetkraft eines Permanent- oder Elektromagneten nach dem Auftreffen auf dem Schotter in einer Trennzone von dem Schotter separiert werden kann. Das Korn gelangt somit nicht in unerwünschter Weise in eine nachfolgende Behandlungszone für die Schottersteine.

Hierbei hat es sich als besonders praxisgerecht erwiesen, wenn das Magnetfeld einem Bereich einer Freifallstrecke des Schotters, insbesondere einem Endbereich der Auflage zugeordnet ist. Hierbei wird die Magnetkraft nicht etwa genutzt, um das mit dem Schotter vermischte Korn herauszulösen. Vielmehr wird mittels der Magnetkraft in der Freifallstrecke lediglich eine Ablenkung der Richtung des Fallweges bewirkt, sodass unabhängig von umgebenden Partikeln oder Schottersteinen eine zuverlässige Trennung erreicht wird. Beispielsweise wird hierbei der Fallwinkel gegenüber der Vertikalen geringfügig gebeugt.

Gemäß einer besonders vorteilhaften Bauform der Vorrichtung ist diese mit einem Fahrwerk ausgestattet und dadurch als mobile Einheit einsetzbar, sodass diese als Bestandteil eines Instandsetzungszuges ausgeführt und in diesen integriert sein kann. Somit gelingt es erstmals, eine über die bloße Fraktionierung der Schottersteine hinausgehende wirksame Behandlung der Schottersteine vor Ort durchzuführen und die auf diese Weise aufbereiteten Schottersteine unmittelbar der weiteren Verwendung zuzuführen.

Um dem Straßenbelag oder den Gleisanlagen nur Schotter mit einer vorgegebenen Korngröße zuzuführen, kann weiterhin vorgesehen sein, dass der gebrochene Schotter unmittelbar nach dem Brechen gesiebt wird.

Vor dem Bestrahlen des Schotters ist es von Vorteil, wenn der aufgenommene Schotter einer Grobreinigung zur Abtrennung von Schmutz unterzogen wird. Dies kann im Rahmen einer Siebung erfolgen. Dementsprechend weist die Vorrichtung eine insbesondere als weitere Siebeinrichtung ausgebildete Grobreinigungseinrichtung auf, die einer Schotteraufnahmeeinrichtung nachgeordnet ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Seitenansicht einer Vorrichtung zur Behandlung von Schottersteinen von Gleisanlagen;
- Fig. 2: eine entlang der Linie II-II geschnittene und vergrößerte Darstellung eines Abschnittes des in Figur 1 gezeigten Vorrichtung.

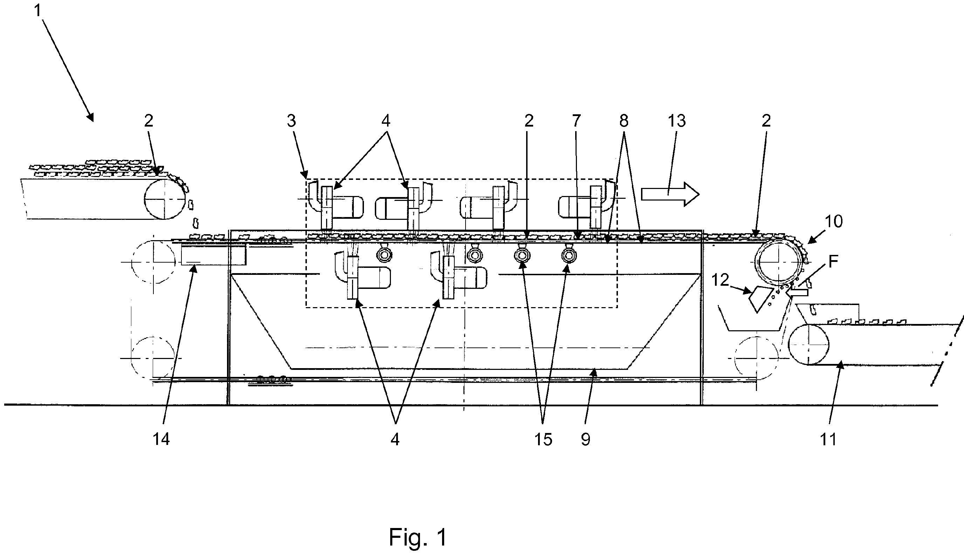

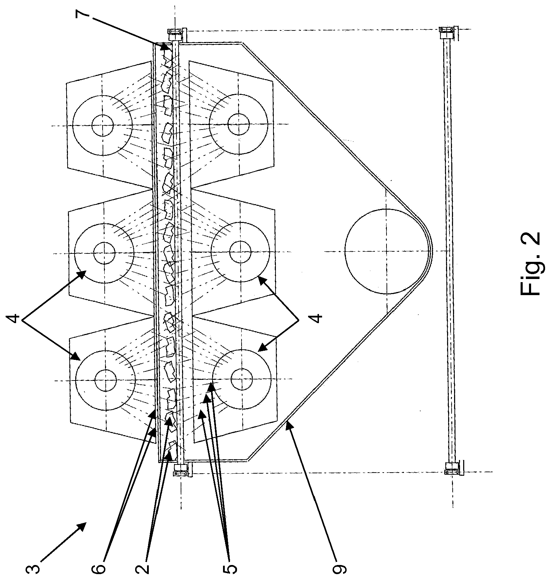

Eine Vorrichtung 1 zur Behandlung von Schottersteinen 2 üblicher Gleisanlagen für Schienenfahrzeuge wird nachstehend anhand der Figuren 1 und 2 näher erläutert. Die Schottersteine 2 gelangen dabei zunächst auf eine Rütteleinheit 14, um so eine möglichst gleichmäßige Verteilung der Schottersteine 2 auf der gesamten Breite der Vorrichtung 1 zu erreichen. Um den gewünschten kinetischen Energieeintrag und eine Reinigung sowie einen mechanischen Abtrag durch Abplatzungen an den Schottersteinen 2 zu erreichen, hat die Vorrichtung 1 eine Strahlvorrichtung 3 mit mehreren Schleuderrädern 4 für ein metallisches Korn 5. Durch das Strahlen mit dem metallischen Korn 5, insbesondere einem Drahtkorn, können neben der Reinigungswirkung die gewünschten Abplatzungen weitaus einfacher erreicht werden als mit Prallmühlen nach dem Stand der Technik, wobei zudem die Anzahl der Auftreffpunkte des Kornes 5 auf den Schottersteinen 2 vergleichsweise groß ist. Zur Effizienzsteigerung hat die Vorrichtung 1 mehrere Austrittsöffnungen 6 für das Korn 5, wobei mehrere Austrittsöffnungen 6 oberhalb und weitere Austrittsöffnungen 6 unterhalb einer Auflage 7 als Transportauflage angeordnet sind, um so einen Großteil der Oberfläche der Schottersteine 2 zu erreichen und deren Oberfläche von Anhaftungen reinigen zu können. Zusätzlich dient ein im Dauerbetrieb oder Impulsbetrieb arbeitender pneumatischer Wender 15 dazu, die Schottersteine 2 für das metallische Korn 5 von allen Seiten zugänglich zu machen. Es wird derzeit davon ausgegangen, dass auf diese Weise ca. 50 % des bisher als Abraum entsorgten Schotters mit der Vorrichtung einer Wiederverwendung zugeführt werden kann.

Um hierbei eine zuverlässige Trennung der Schottersteine 2 und der erzeugten Abplatzungen von dem zur Reinigung eingesetzten Korn 5 zu erreichen und dieses einer Wiederverwendung zuzuführen, wird die Mischung aus Schotter, Abplatzungen und Strahlkorn zunächst über die mit Durchlassöffnungen 8 ausgestattete, als Transportband ausgeführte Auflage 7 geführt, sodass die kleineren Kornanteile durch diese Durchlassöffnungen 8 auf eine darunter liegende, als Sammeltrog ausgeführte Sammelfläche 9 gelangen, in der eine nicht weiter dargestellte Sortierung zwischen dem metallischen Korn 5 und abgetrennten Partikeln der Schottersteine 2 durchgeführt wird. An einem Endbereich der Auflage 7 gelangen die Schottersteine 2 in einer Freifallstrecke 10 auf ein Förderband 11. In dem Bereich der Freifallstrecke 10 wirkt zusätzlich eine Magnetkraft F eines Elektromagneten 12, durch die das metallische Korn 5 entgegen der Förderrichtung 13 abgelenkt wird. Dadurch trifft das Korn 5 nicht auf das Förderband 11, sondern auf die Sammelfläche 9. Somit wird also der zumindest kurzzeitige magnetische Anhaftungseffekt zur Separierung genutzt. Vorteilhaft wirkt sich dabei aus, dass die in den nachfolgenden Prozessschritten unerwünschten magnetischen Eigenschaften des Kornes 5 bereits durch den Aufprall auf der Sammelfläche 9 vollständig neutralisiert werden.

## Patentansprüche

1. Verfahren zur Behandlung von Schottersteinen (2) für Gleisanlagen oder im Straßenbau mit einer Vorrichtung (1) umfassend eine Strahlvorrichtung (3) für metallisches Korn (5) als Prallkörper, wobei die Schottersteine (2) durch das stark beschleunigte metallische Korn (5) bestrahlt werden, wobei durch kinetischen Energieeintrag bei der Energieübertragung zwischen dem metallischen Korn (5) und den Schottersteinen (2) ein mechanischer Abtrag erfolgt, und wobei das metallische Korn (5) von den Schottersteinen (2) separiert und wiederverwendet wird.

2. Verfahren nach Anspruch 1, **dadurch gekennzeichnet, dass** die Schottersteine (2) während des Transportes kontinuierlich durch das Korn (5) bestrahlt werden.

## Claims

1. Method for the treatment of ballast (2) for track systems or in road building, with a device (1) comprising a blasting device (3) for metal particles (5) as impact bodies, wherein the ballast (2) is blasted by the greatly accelerated metal particles (5), wherein mechanical abrasion takes place due to the introduction of kinetic energy in the energy transfer between the metal particles (5) and the ballast (2), and wherein the metal particles (5) are separated from the ballast (2) and reused.

2. Method according to Claim 1, **characterized in that** the ballast (2) is continuously blasted by the particles (5) during transport.

## Revendications

1. Procédé de traitement de ballast (2) pour voies ferrées ou dans la construction routière, avec un dispositif (1) comprenant un dispositif de projection (3) pour des grains métalliques (5) en tant que corps d'impact, le ballast (2) étant pulvérisé par les grains métalliques (5) fortement accélérés, et par apport d'énergie cinétique lors du transfert d'énergie entre les grains métalliques (5) et le ballast (2), une usure mécanique se produisant et les grains métalliques (5) étant séparés du ballast (2) et réutilisés.

2. Procédé selon la revendication 1, **caractérisé en ce que** le ballast (2) est pulvérisé en continu par les grains (5) pendant le transport.
